# EUROPÄISCHE PATENTSCHRIFT

(11) **EP 3 303 039 B1**
(45) Veröffentlichungstag und Bekanntmachung des Hinweises auf die Patenterteilung: **01.05.2019**
(21) Anmeldenummer: 16727664.1
(22) Anmeldetag: 01.06.2016
(51) Int. Cl.: B60K 1/00, B60K 17/22, B60K 17/24, H02K 5/18, H02K 9/00, H02K 9/22, F16C 3/02, B60K 6/26

(54) **HOHLWELLENANORDNUNG**
HOLLOW SHAFT ASSEMBLY
ENSEMBLE D'ARBRE CREUX

(30) Priorität: 03.06.2015 DE 102015108817
(43) Veröffentlichungstag der Anmeldung: 11.04.2018
(73) Patentinhaber: ThyssenKrupp Presta TecCenter AG, 9492 Eschen (LI); thyssenkrupp AG, 45143 Essen (DE)
(72) Erfinder: MUSTER, Manfred, 6713 Ludesch (AT); PAUL, Daniel, 09235 Burkhardtsdorf (DE)
(74) Vertreter: thyssenkrupp Intellectual Property GmbH
(86) Internationale Anmeldenummer: PCT/EP2016/062316
(87) Internationale Veröffentlichungsnummer: WO 2016/193277

(56) Entgegenhaltungen:
- EP-A1- 2 595 283
- WO-A1-2007/094350
- DE-A1-102008 001 607

## Beschreibung

Die vorliegende Erfindung betrifft eine Hohlwellenanordnung gemäß dem Oberbegriff des Anspruchs 1 und ein Verfahren zur Montage einer Hohlwellenanordnung.

### STAND DER TECHNIK

Die DE 10 2008 043 367 A1 offenbart eine Hybridantriebseinrichtung für ein Kraftfahrzeug, mit einer Verbrennungskraftmaschine und einem Elektromotor jeweils zum Antrieb des Kraftfahrzeuges. An einer Hohlwelle im Antriebsstrang ist ein Rotor des Elektromotors angeordnet. Mittel zum Fördern eines Kühlfluides fördern dieses Kühlfluid durch den Innenraum der Hohlwelle, um den Rotor und die Hohlwelle zu kühlen.

In dem Innenraum der Hohlwelle sind Kühlrippen angeordnet, um die Wärme bestmöglich auf das Kühlfluid zu übertragen. Die Kühlrippen sind recht aufwendig einstückig an der Innenwandung der Hohlwelle angeformt. Ferner ist der Innendurchmesser der Hohlwelle und damit der für die Kühlung nutzbare Bereich im Durchmesser recht klein dimensioniert, wodurch sich eine begrenzte Kühlleistung ergibt.

Eine gattungsgemäße Hohlwellenanordnung ist ferner aus der EP 2 595 283 A1 bekannt geworden. Der Kühlkörper umfasst eine Außenhülse als hülsenförmigen Grundkörper mit radial nach innen abragenden Kühlstrukturen, die mittels Presspassung in die Hohlwelle eingesetzt sind. Der Aufbau dieser Hohlwellenanordnung ist wenig kompakt. Ferner ist die Montage aufwendig.

### OFFENBARUNG DER ERFINDUNG

Es ist daher die Aufgabe der vorliegenden Erfindung, eine Hohlwellenanordnung zu schaffen, die sich insbesondere durch einen einfachen Aufbau, ein sehr gutes Kühlverhalten und eine leichte Montierbarkeit auszeichnet.

Diese Aufgabe wird von einer Hohlwellenanordnung mit den Merkmalen des Anspruchs 1 sowie von einem Verfahren zur Montage einer Hohlwellenanordnung mit den Merkmalen des Anspruchs 8 gelöst. Vorteilhafte Weiterbildungen der Erfindung sind in den abhängigen Ansprüchen und der Beschreibung angegeben.

Der Kühlkörper wird separat von der Hohlwelle hergestellt. Dabei eignen sich für die Herstellung des Kühlkörpers Werkstoffe, die zwar eine gute Wärmeleitfähigkeit aufweisen, an die aber keine hohen Festigkeitsanforderungen gestellt werden. Insbesondere auf Aluminium basierende Legierungen haben sich als vorteilhaft erwiesen. Die Herstellung der Hohlwelle selbst ist vereinfacht, da im Inneren der relativ langen Hohlwelle keine komplexen Kühlstrukturen auszubilden sind.

Vorteilhafterweise ist der Kühlkörper kraftschlüssig im Innenraum gehalten. Insbesondere ist der Kühlkörper radial im Innenraum eingespannt. Vorteilhafterweise ist keine weitere radiale Befestigung vorgesehen, der Kühlkörper wird folglich ausschließlich durch die in radialer Richtung wirkende kraftschlüssige Verbindung im Innenraum gehalten. Hierzu wird insbesondere ein radial komprimierbarer Kühlkörper verwendet, der in einem entspannten Zustand einen Außendurchmesser aufweist, der größer ist als der Innendurchmesser der Hohlwelle, in welchen der Kühlkörper eingesetzt wird. Zur Montage ist der Kühlkörper so radial komprimierbar, d.h. der Außendurchmesser des Kühlkörpers kann durch radiale mechanische Beaufschlagung derart verringert werden und dabei insbesondere vorgespannt werden, dass der Außendurchmesser geringer ist als der Innendurchmesser der Hohlwelle. Nun wird der Kühlkörper in die Hohlwelle eingeführt; anschließend wird die radiale Beaufschlagung entfernt, wodurch sich der Kühlkörper wieder aufweitet, insbesondere dabei elastisch zurückfedert, und sich radial an der Innenwandung der Hohlwelle kraftschlüssig abstützt.

Erfindungsgemäß ist ein Außendurchmesser des Kühlkörpers größer als ein Innendurchmesser eines Lagers, insbesondere zweier Lager, zur Lagerung der Hohlwelle. Hierdurch werden gute Kühlleistungen durch einen großen Kühlkörper und große Berührungsflächen zwischen Kühlkörper und Hohlwelle möglich; zugleich werden radial kleine, also kostengünstige und leichte Lager zur Lagerung der Hohlwelle verwendet, die sich zudem durch geringere Reibverluste im Betrieb auszeichnen.

Vorteilhafterweise ist eine Außenumfangsfläche des Kühlkörpers komplementär ausgebildet zu einer Innenumfangsfläche der Hohlwelle, insbesondere sind die Außenumfangsfläche und die Innenumfangsfläche zylindrisch mit einander entsprechendem Außendurchmesser bzw. Innendurchmesser ausgebildet. Unter den einander entsprechenden Außen- bzw. Innendurchmessern sind insbesondere die Durchmesser im montierten Zustand der Anordnung gemeint. Durch die komplementäre Ausgestaltung wird eine große Kontaktfläche zwischen Hohlwelle und Kühlkörper bereitgestellt, was eine gute Wärmeübertragungsleistung begünstigt. Eine Hohlwelle mit einer zylindrischen Innenfläche ist zudem einfach herstellbar.

Erfindungsgemäß umfasst der Kühlkörper einen hülsenförmigen Grundkörper, von dem die Kühlstrukturen radial nach innen abragen. Der hülsenförmige Grundkörper stellt insbesondere die zylindrische Oberfläche bereit, die zur Anlage mit der Hohlwelle dient. Insbesondere unterstützt die Hülsenform bei entsprechender Dimensionierung die für die radiale Komprimierbarkeit erforderliche Elastizität.

Der hülsenförmige Grundkörper erhält die radiale Komprimierbarkeit dadurch, dass der Grundkörper einen Umfangsbereich aufweist, der in Umfangsrichtung verkleinerbar ist. Dieser Umfangsbereich wird erfindungsgemäß durch einen Axialspalt gebildet. Dieser Umfangsbereich gestattet es, dass der Außenumfang und damit der Außendurchmesser des hülsenförmigen Grundkörpers ohne plastische Verformung verkleinerbar ist. Ferner ermöglicht es dieser Umfangsbereich, dass trotz unterschiedlicher Wärmeausdehnungskoeffizienten der Werkstoffe von Hohlwelle und Kühlkörper stets eine optimale Anlage zwischen Kühlkörper und Hohlwelle sowohl bei geringen Temperaturen als auch hohen Temperaturen gegeben ist. Dieser verkleinerbare Umfangsbereich, insbesondere der Axialspalt, erstreckt sich vorteilhafterweise über die gesamte axiale Länge des Grundkörpers.

In einer vorteilhaften Weiterbildung sind zwei Enden des hülsenförmigen Grundkörpers, die durch den vorbeschriebenen Umfangsbereich voneinander getrennt sind, über eine nach radial innen ragende Dehnungsfalte miteinander verbunden. Bereits bei einer vergleichsweise kleinen Umfangsverkleinerung des hülsenförmigen Grundkörpers unterliegt diese Dehnungsfalte einer vergleichsweise großen Verformung, wodurch eine große Vorspannung erzielt werden kann. Die Parameter der Verformbarkeit und damit die Dimension der Vorspannung lassen sich durch Dimensionierung der Dehnungsfalte einstellen.

Vorteilhafterweise ist die Hohlwelle mehrteilig ausgebildet und weist vor der Endmontage zumindest ein insbesondere hülsenförmiges Aufnahmeteil mit einer axialen Öffnung zur Einführung des Kühlkörpers und zumindest ein Verschlussteil zum Verschließen der axialen Öffnung auf. Das Aufnahmeteil und das Verschlussteil werden während der Montage fest miteinander verbunden, beispielsweise durch einen Pressverband. Vorher jedoch wird durch die Öffnung der Kühlkörper in den Innenraum der Hohlwelle eingeführt. Anschließend erfolgt das Verschließen der Hohlwelle durch das Verschlussteil. Das Verschlussteil ist insbesondere als Flansch ausgebildet, der beispielsweise einteilig mit einem anschließenden Wellenabschnitt ausgebildet ist.

Die Erfindung betrifft ferner ein Verfahren zur Montage einer Hohlwellenanordnung der vorbeschriebenen Art, umfassend die folgenden Verfahrensschritte: Verringern, insbesondere elastisches Verringern, der radialen Dimension des Kühlkörpers durch radial nach innen wirkende Kraftbeaufschlagung, Einführen des dadurch in radialer Richtung verkleinerten Kühlkörpers durch eine axiale Öffnung in den Innenraum, Entfernen der radialen Beaufschlagung, so dass sich der Kühlkörper, insbesondere elastisch, radial vergrößert und eine kraftschlüssige Verbindung mit der Hohlwelle eingeht. Vorteilhafterweise weist der Kühlkörper im eingebauten Zustand gegenüber dem Kühlkörper im nicht eingebauten Zustand einen um zumindest 0,5% verringerten Außendurchmesser auf, wodurch sich die radiale Vorspannung ergibt, die für die kraftschlüssige Verbindung zwischen Hohlwelle und Kühlkörper über einen großen Temperaturbereich erforderlich ist. Auf die bezüglich der Vorrichtung genannten Vorteile und weiteren Ausgestaltungsmöglichkeiten wird verwiesen. Durch das elastische Formänderungsverhalten wird insbesondere ein Vollkontakt zwischen der Hohlwelle und dem Kühlkörper und damit eine gute Wärmeübertragungsfähigkeit über verschiedene Betriebstemperaturen gewährleistet.

### AUSFÜHRUNGSBEISPIEL DER ERFINDUNG

Weitere, die Erfindung verbessernde Maßnahmen werden nachstehend gemeinsam mit der Beschreibung eines vorteilhaften Ausführungsbeispiels der Erfindung anhand der Figuren näher dargestellt. Es zeigt:
- Figur 1: eine erfindungsgemäße Hohlwellenanordnung im Längsschnitt;
- Figur 2: einen Kühlkörper der Hohlwellenanordnung nach Figur 1
a) in Frontalansicht,
b) in perspektivischer Darstellung;
- Figur 3: eine Weiterbildung des Kühlkörpers der Hohlwellenanordnung nach Figur 1
a) in Frontalansicht,
b) in perspektivischer Darstellung.

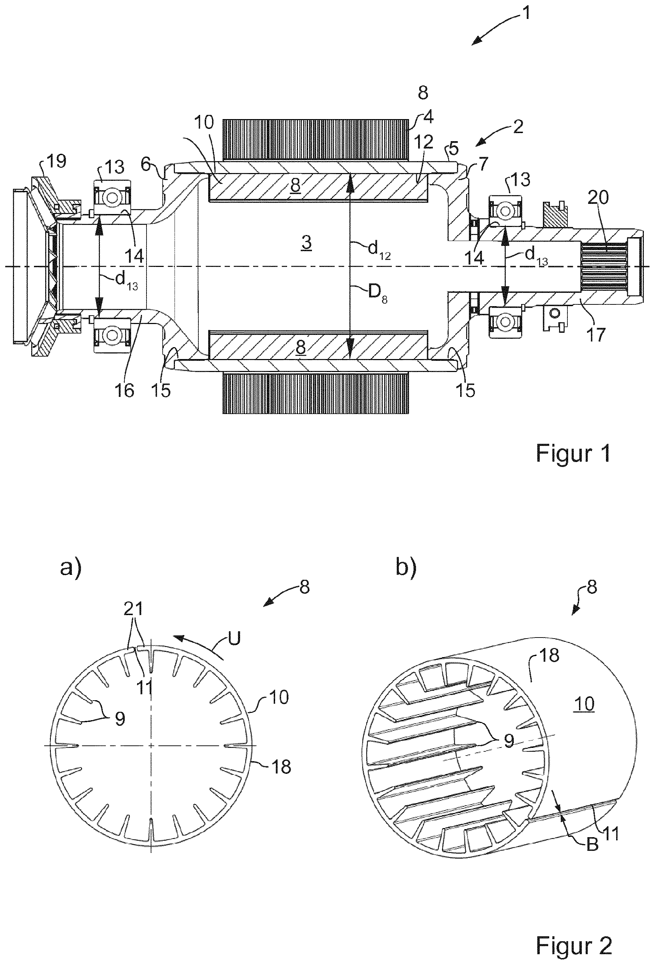

Figur 1 zeigt eine erfindungsgemäße Hohlwellenanordnung 1, die beispielsweise in einem Antriebsstrang eines Hybridfahrzeugs eingesetzt werden kann. Die Hohlwellenanordnung 1 umfasst eine Rotorwelle 2, die als Hohlwelle ausgestaltet ist. An einem Außenumfang der Rotorwelle 2 ist ein Rotor eines Elektromotors befestigt. Zu erkennen ist das Blechpaket 4 des Rotors. An einem axialen Ende der Rotorwelle 2 weist diese einen ersten Wellenabschnitt 16 auf, an dem ein Verbrennungsmotor anschließbar ist. Ein Lüfterrad 19 ist zwischen dem Verbrennungsmotor und der Rotorwelle 2 angeordnet, über welches ein Kühlfluid in den Innenraum 3 der Hohlwelle gefördert wird. Am anderen axialen Ende der Rotorwelle 2 weist diese einen zweiten Wellenabschnitt 17 mit einer Innenverzahnung 20 auf; hieran ist ein nicht dargestelltes Schaltgetriebe anschließbar, welches mit einer Antriebsachse verbunden ist. Über zwei Wälzlager 13 ist die Rotorwelle 2 gegenüber einer Fahrzeugkarosserie oder einem Fahrzeugrahmen gelagert. An den beiden Wellenabschnitten 16, 17 befinden sich jeweils Lagersitze 14 für die genannten Wälzlager 13.

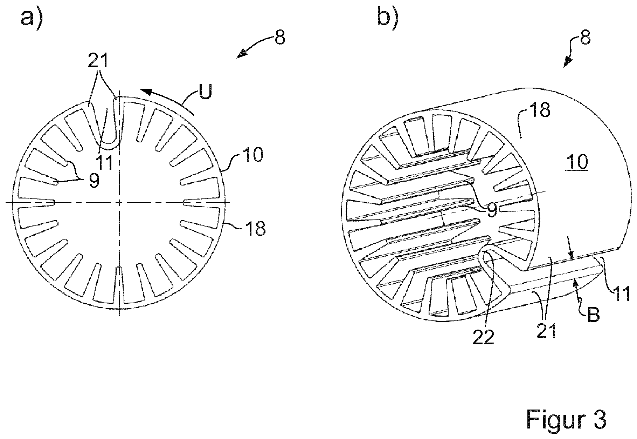

Die Rotorwelle 2 ist mehrteilig ausgebildet und weist in einem axial zentralen Bereich ein separates Aufnahmeteil 5 auf. Das Aufnahmeteil 5 ist hülsenförmig ausgebildet und weist sowohl eine zylindrische Außenfläche als auch eine zylindrische Innenfläche 12 auf. Dieses hülsenförmige Aufnahmeteil 5 definiert einen radial innen liegenden Innenraum 3, in dem ein Kühlkörper 8 angeordnet ist, der anhand der Figuren 2 und 3 noch näher vorgestellt wird. Das hülsenförmige Aufnahmeteil 5 weist an beiden axialen Enden jeweils Öffnungen 15 auf, welche durch ein erstes Verschlussteil 6 beziehungsweise ein zweites Verschlussteil 7 verschlossen sind. Einstückig an diese ersten und zweiten Verschlussteile 6, 7 schließen sich die ersten bzw. zweiten Wellenabschnitte 16, 17 an.

Die Rotorwelle 2 wird folglich gebildet aus dem ersten Wellenabschnitt 16, dem ersten Verschlussteil 6, dem Aufnahmeteil 5, dem zweiten Verschlussteil 7 und dem zweiten Wellenabschnitt 17. Die beiden Verschlussteile 6, 7 sind jeweils fest mit dem Aufnahmeteil 5 verbunden, beispielsweise durch einen Pressverband oder eine Schweißnaht. Es ist zu erkennen, dass im montierten Zustand ein Außendurchmesser D₈ des Kühlkörpers 8 bzw. ein Innendurchmesser d₁₂ der zylindrischen Innenfläche 12 deutlich größer sind als die Innendurchmesser d₁₃ der beiden Wälzlager 13. Somit ist es bei der vorliegenden Rotorwelle 2 zwar möglich, kleine Wälzlager vorzusehen, aber dennoch einen Kühlkörper 8 mit einem vergleichsweise großen Durchmesser zu verwenden. Bislang schlossen sich diese beiden Eigenschaften gegenseitig aus.

In den Figuren 2a und 2b ist der Kühlkörper 8 in Einzelheit dargestellt. Der Kühlkörper 8 weist einen hülsenförmigen Grundkörper 18 auf, von dem eine Vielzahl von Kühlrippen 9 radial nach innen vorstehen. Eine Außenumfangsfläche 10 des hülsenförmigen Grundkörpers 18 ist nahezu zylindrisch ausgebildet. Der hülsenförmige Grundkörper 18 weist einen über die gesamte axiale Länge Axialspalt 11 auf, wodurch der Grundkörper 18 grundsätzlich radial elastisch komprimierbar ist. Durch eine radiale Kompression kann der Kühlkörper 8 radial vorgespannt werden. Aus diesem komprimierten Zustand kann sich der Grundkörper 18 selbsttätig aufweiten, sobald eine die Komprimierung erzeugende Beaufschlagung entfällt. Durch den Axialspalt 11 werden, in Umfangsrichtung U betrachtet, zwei freiliegende Enden 21 des Grundkörpers 18 gebildet.

Die radiale Komprimierbarkeit wird bei der Montage der Anordnung ausgenutzt. Der Kühlkörper 8 weist im unmontierten Zustand einen Außendurchmesser D₈ auf, der zunächst größer ist als der Innendurchmesser d₁₂ der Innenfläche 12 des Aufnahmeteils 5. Zur Montage wird der Kühlkörper 8 durch eine radiale Beaufschlagung radial komprimiert und somit unter Vorspannung gesetzt. Dabei wird der Außendurchmesser D₈ des Kühlköpers 8 derart elastisch verkleinert, dass dieser geringer ist als der Innendurchmesser d₁₂ der Innenfläche 12. In diesem Zustand wird der Kühlkörper 8 durch eine der axialen Öffnungen 15 in den Innenraum 3 eingeführt. Nun wird die radiale Beaufschlagung entfernt; der Kühlkörper federt elastisch zurück. Dabei weitet sich der Kühlkörper 18 radial auf und strebt in seinen Ausgangszustand zurück. Da der Innendurchmesser d₁₂ des Aufnahmeteils 5 geringer ist als der Außendurchmesser D₈ des Kühlkörpers 8 im entspannten Zustand presst sich der Kühlkörper 8 nun von radial innen gegen die Innenfläche 12 des Aufnahmeteils 5 und geht so eine kraftschlüssige Befestigung mit dem Aufnahmeteil 5 ein. Eine weitere radiale Befestigung ist nicht mehr erforderlich. Wie aus Figur 1 zu erkennen ist, kann allerdings durch die beiden Verschlussteile eine axiale formschlüssige Positionierung des Kühlkörpers 8 innerhalb des Innenraums 3 vorgenommen werden.

Besonders geeignet sind Kühlkörper 8, deren Außendurchmesser D₈ im nicht eingebauten Zustand um zumindest 0,5 %, und insbesondere um maximal 2,5%, größer sind als der vorhergesehene radiale Einbauraum, der durch den Innendurchmesser d₁₂ definiert wird. Zwar könnte durch eine Vergrößerung des Axialspaltes in Umfangsrichtung die Komprimierbarkeit des Kühlkörpers vergrößert werden; dies führt allerdings zu einer Verringerung der Außenfläche des Kühlkörpers, was die Wärmeübertragungsleistung des Kühlkörpers aufgrund des geringeren Kontakts zur Hohlwelle mindert. Daher ist es bevorzugt, den Axialspalt und damit die Komprimierbarkeit auf das Nötigste zu beschränken.

In einer besonders geeigneten Werkstoffpaarung ist das Aufnahmeteil 5 ein Stahlteil und der Kühlkörper 8 ein Aluminiumteil.

Bei einem beispielhaften Außendurchmesser D₈ von ca. 80 mm weist der Axialspalt 11 eine Spaltbreite B zwischen 0,5 mm und 10 mm, Vorteilhafterweise etwa 1,2 mm im eingebauten Zustand und bei 20°C auf.

Die Abmessungen des Kühlkörpers 8 sind bei der erfindungsgemäßen Ausgestaltung unabhängig vom Lagerinnendurchmesser d₁₃ der Wälzlager 13. Der Lagerinnendurchmesser d₁₃ kann so recht gering gewählt werden, wobei zugleich der Kühlkörper 8 unabhängig davon an der erforderlichen Wärmeübertragungsleistung ausgelegt werden kann. Es besteht durch die große zylindrische Kontaktfläche zwischen der Innenfläche 12 des Aufnahmeteils 5 und dem Kühlkörper 8 eine große Berührungsfläche für die Wärmeübertragung, wobei die vollflächige Berührung zwischen der zylindrischen Innenfläche 12 des Aufnahmeteils 5 und der zylindrischen Außenfläche 10 des Kühlkörpers 8 durch die elastische Vorspannung über einen großen Temperaturbereich sichergestellt ist.

Figur 3 zeigt eine Weiterbildung des Kühlkörpers nach Figur 2. Die zwei Enden 21 des hülsenförmigen Grundkörpers 18, die durch den Axialspalt 11 voneinander getrennt sind, sind über eine nach radial innen ragende Dehnungsfalte 22 miteinander verbunden. Im vorliegenden Fall ist die Dehnugnsfalte u-förmig ausgebildet. Die Gestalt der Dehnungsfalte hat weitgehenden Einfluss auf die elastischen Parameter des hülsenförmigen Grundkörpers. Durch die Wandstärke, die Größe und die Form der Dehnungsfalte 22 lässt sich die Elastizität der Dehnungsfalte und damit die Elastizität des Grundkörpers einstellen.

### Bezugszeichenliste

- 1: Hohlwellenanordnung
- 2: Hohlwelle / Rotorwelle
- 3: Innenraum
- 4: Blechpaket eines Rotors eines Elektromotors
- 5: Aufnahmeteil
- 6: erstes Verschlussteil
- 7: zweites Verschlussteil
- 8: Kühlkörper
- 9: Kühlrippen
- 10: zylindrische Außenfläche des Kühlkörpers
- 11: Axialspalt
- 12: zylindrische Innenfläche des Aufnahmeteils
- 13: Wälzlager
- 14: Lagersitz
- 15: Öffnung des Mittelteils
- 16: erster Wellenabschnitt
- 17: zweiter Wellenabschnitt
- 18: hülsenförmiger Grundkörper
- 19: Lüfterrrad
- 20: Innenverzahnung
- 21: Ende des hülsenförmigen Grundkörper
- 22: Dehnungsfalte

- D8: Außendurchmesser des Kühlkörpers
- d12: Innenruchmesser der zylindrischen Innenfläche des Aufnahmeteils
- d13: Innendurchmesser des Wälzlagers
- B: Spaltbreite
- U: Umfangsrichtung

## Patentansprüche

1. Hohlwellenanordnung (1), umfassend eine Hohlwelle (2), insbesondere Rotorwelle eines Elektromotors, durch die zum Zwecke der Kühlung ein Fluid durchführbar ist, sowie wenigstens ein Lager zur Lagerung der Hohlwelle (2),
wobei in einem Innenraum (3) der Hohlwelle (2) oberflächenvergrößernde Kühlstrukturen (9) zur Übertragung von thermischer Energie von der Hohlwelle (2) auf das Fluid angeordnet sind, wobei die Kühlstrukturen (9) mit der Hohlwelle (2) verbunden und Teil eines Kühlkörpers (8) sind, welcher separat zur Hohlwelle (2) ausgebildet ist, wobei der Kühlkörper (8) einen hülsenförmigen Grundkörper (18) umfasst, von dem die Kühlstrukturen (9) radial nach innen abragen,
**dadurch gekennzeichnet,**
**dass** der hülsenförmige Grundkörper (18) einen Axialspalt (11) aufweist und dass ein Außendurchmesser (D₈) des Kühlkörpers (8) größer ist als ein Innendurchmesser (d₁₃) des wenigstens einen Lagers (13).

2. Hohlwellenanordnung (1) nach dem vorherigen Anspruch,
**dadurch gekennzeichnet,**
**dass** der Kühlkörper (8) kraftschlüssig im Innenraum (3) gehalten ist, insbesondere radial im Innenraum (3) eingespannt ist.

3. Hohlwellenanordnung (1) nach einem der vorherigen Ansprüche,
**dadurch gekennzeichnet,**
**dass** eine Außenumfangsfläche (10) des Kühlkörpers (8) komplementär ausgebildet ist zu einer Innenumfangsfläche (12) der Hohlwelle (3).

4. Hohlwellenanordnung (1) nach dem vorherigen Anspruch,
**dadurch gekennzeichnet,**
**dass** die Außenumfangsfläche (10) und die Innenumfangsfläche (12) jeweils zylindrisch mit einander entsprechendem Außendurchmesser (D₈) bzw. Innendurchmesser (d₁₂) ausgebildet sind.

5. Hohlwellenanordnung (1) nach einem der vorherigen Ansprüche,
**dadurch gekennzeichnet,**
**dass** der hülsenförmige Grundkörper (18) einen Umfangsbereich (11) aufweist, der in Umfangsrichtung (U) verkleinerbar ist.

6. Hohlwellenanordnung (1) nach einem der vorherigen Ansprüche,
**dadurch gekennzeichnet,**
**dass** zwei Enden (21) des hülsenförmigen Grundkörpers (18), die durch den Axialspalt (11) voneinander getrennt sind, über eine nach radial innen ragende Dehnungsfalte (22) miteinander verbunden sind.

7. Hohlwellenanordnung (1) nach einem der vorherigen Ansprüche,
**dadurch gekennzeichnet,**
**dass** die Hohlwelle (2) mehrteilig ausgebildet ist und
zumindest ein Aufnahmeteil (5) mit einer axialen Öffnung (15) zur Aufnahme des Kühlkörpers (8) aufweist und
zumindest ein Verschlussteil (6, 7) zum Verschließen der axialen Öffnung (15) aufweist.

8. Verfahren zur Montage einer Hohlwellenanordnung (1) nach einem der vorherigen Ansprüche, umfassend die folgenden Verfahrensschritte:
- Verringern der radialen Dimension des Kühlkörpers (8) durch radial nach innen wirkende Kraftbeaufschlagung,
- Einführen des dadurch in radialer Richtung verkleinerten Kühlkörpers (8) durch eine axiale Öffnung (15) in den Innenraum (3), und
- Entfernen der radialen Kraftbeaufschlagung, so dass sich der Kühlkörper (8) radial vergrößert und eine kraftschlüssige Verbindung mit der Hohlwelle (3) eingeht.

9. Verfahren nach dem vorherigen Anspruch,
**dadurch gekennzeichnet,**
**dass** der Kühlkörper (8) im eingebauten Zustand gegenüber dem Kühlkörper im nicht eingebauten Zustand einen um zumindest 0,5% verringerten Außendurchmesser (D₈) aufweist.

## Claims

1. Hollow shaft arrangement (1), comprising a hollow shaft (2), in particular a rotor shaft of an electric motor, through which shaft a fluid is able to pass for the purpose of cooling, and comprising at least one bearing for mounting the hollow shaft (2), wherein surface-enlarging cooling structures (9) for transferring thermal energy from the hollow shaft (2) to the fluid are arranged in an inner space (3) of the hollow shaft (2), wherein the cooling structures (9) are connected to the hollow shaft (2) and are part of a cooling body (8) which is formed separately from the hollow shaft (2), wherein the cooling body (8) comprises a sleeve-like main body (18) from which the cooling structures (9) project radially inwardly,
**characterized in that**
the sleeve-like main body (18) has an axial gap (11), and **in that** an outer diameter (D₈) of the cooling body (8) is larger than an inner diameter (d₁₃) of the at least one bearing (13).

2. Hollow shaft arrangement (1) according to the preceding claim,
**characterized in that**
the cooling body (8) is held in the inner space (3) in a force-fitting manner, in particular is clamped in radially in the inner space (3).

3. Hollow shaft arrangement (1) according to either of the preceding claims,
**characterized in that**
an outer circumferential surface (10) of the cooling body (8) is formed so as to complement an inner circumferential surface (12) of the hollow shaft (3) .

4. Hollow shaft arrangement (1) according to the preceding claim,
**characterized in that**
the outer circumferential surface (10) and the inner circumferential surface (12) are formed in each case cylindrically with a mutually corresponding outer diameter (D₈) and inner diameter (d₁₂), respectively.

5. Hollow shaft arrangement (1) according to one of the preceding claims,
**characterized in that**
the sleeve-like main body (18) has a circumferential region (11) which is able to be reduced in the circumferential direction (U).

6. Hollow shaft arrangement (1) according to one of the preceding claims,
**characterized in that**
two ends (21) of the sleeve-like main body (18), which are separated from one another by the axial gap (11), are connected to one another via a radially inwardly projecting expansion fold (22).

7. Hollow shaft arrangement (1) according to one of the preceding claims,
**characterized in that**
the hollow shaft (2) is of multi-part form and
comprises at least one receptacle part (5) with an axial opening (15) for accommodating the cooling body (8) and
comprises at least one closure part (6, 7) for closing off the axial opening (15).

8. Method for assembling a hollow shaft arrangement (1) according to one of the preceding claims, comprising the following method steps:
- reducing the radial dimension of the cooling body (8) by way of radially inwardly acting force loading,
- inserting the cooling body (8), which is thereby reduced in the radial direction, through an axial opening (15) into the inner space (3), and
- removing the radial force loading, with the result that the cooling body (8) increases radially and undergoes force-fitting connection to the hollow shaft (3).

9. Method according to the preceding claim,
**characterized in that**
the cooling body (8) in the installed state has an outer diameter (D₈) which is reduced by at least 0.5% in comparison with the cooling body in the non-installed state.

## Revendications

1. Ensemble d'arbre creux (1), comportant un arbre creux (2), en particulier un arbre de rotor d'un moteur électrique, arbre creux à travers lequel peut être guidé un fluide à des fins de refroidissement, ainsi qu'au moins un palier servant à supporter l'arbre creux (2),
des structures de refroidissement (9) augmentant la surface étant disposées dans un espace intérieur (3) de l'arbre creux (2) pour le transfert d'énergie thermique de l'arbre creux (2) au fluide, les structures de refroidissement (9) étant reliées à l'arbre creux (2) et faisant partie d'un corps de refroidissement (8), lequel est réalisé séparément de l'arbre creux (2), le corps de refroidissement (8) comportant un corps de base (18) en forme de douille à partir duquel les structures de refroidissement (9) font saillie radialement vers l'intérieur,
**caractérisé en ce que**
le corps de base (18) en forme de douille comprend un interstice axial (11), et **en ce qu'**un diamètre extérieur (D₈) du corps de refroidissement (8) est supérieur à un diamètre intérieur (d₁₃) dudit au moins un palier (13).

2. Ensemble d'arbre creux (1) selon la revendication précédente,
**caractérisé en ce que**
le corps de refroidissement (8) est retenu à force dans l'espace intérieur (3), en particulier est serré radialement dans l'espace intérieur (3).

3. Ensemble d'arbre creux (1) selon l'une des revendications précédentes,
**caractérisé en ce**
**qu'**une surface périphérique extérieure (10) du corps de refroidissement (8) est formée de manière complémentaire à une surface périphérique intérieure (12) de l'arbre creux (3).

4. Ensemble d'arbre creux (1) selon la revendication précédente,
**caractérisé en ce que**
la surface périphérique extérieure (10) et la surface périphérique intérieure (12) sont formées respectivement cylindriquement avec le diamètre extérieur (D₈) et le diamètre intérieur (d₁₂) correspondant l'un à l'autre.

5. Ensemble d'arbre creux (1) selon l'une des revendications précédentes,
**caractérisé en ce que**
le corps de base (18) en forme de douille comprend une zone périphérique (11) qui peut être réduite dans la direction périphérique (U).

6. Ensemble d'arbre creux (1) selon l'une des revendications précédentes,
**caractérisé en ce que**
deux extrémités (21) du corps de base (18) en forme de douille, qui sont séparées l'une de l'autre par l'interstice axial (11), sont reliées l'une à l'autre par le biais d'un pli d'expansion (22) faisant saillie radialement vers l'intérieur.

7. Ensemble d'arbre creux (1) selon l'une des revendications précédentes,
**caractérisé en ce que**
l'arbre creux (2) est formé en plusieurs parties et comprend au moins une partie de réception (5) dotée d'une ouverture axiale (15) destinée à recevoir le corps de refroidissement (8) et
comprend au moins une partie de fermeture (6, 7) servant à fermer l'ouverture axiale (15).

8. Procédé de montage d'un ensemble d'arbre creux (1) selon l'une des revendications précédentes, comportant les étapes de procédé suivantes :
- diminution de la dimension radiale du corps de refroidissement (8) par application de force agissant radialement vers l'intérieur,
- introduction du corps de refroidissement (8) ainsi réduit dans la direction radiale à travers une ouverture axiale (15) dans l'espace intérieur (3), et
- suppression de l'application de force radiale de sorte que le corps de refroidissement (8) s'agrandisse radialement et réalise une liaison à force avec l'arbre creux (3).

9. Procédé selon la revendication précédente,
**caractérisé en ce que**
le corps de refroidissement (8) à l'état installé présente, par rapport au corps de refroidissement à l'état non installé, un diamètre extérieur (D₈) réduit d'au moins 0,5 %.
